(19) Europäisches Patentamt
European Patent Office
Office européen des brevets

(11) Publication number : 0 641 804 A2

# (12) EUROPEAN PATENT APPLICATION

(21) Application number : **94306158.0**

(22) Date of filing : **19.08.94**

(51) Int. Cl.$^6$ : **C08F 4/62,** C08F 10/00

(30) Priority : **25.08.93 GB 9317763**
**22.06.94 GB 9412466**

(43) Date of publication of application :
**08.03.95 Bulletin 95/10**

(84) Designated Contracting States :
**AT BE CH DE DK ES FR GB GR IE IT LI LU MC NL PT SE**

(71) Applicant : **BP Chemicals Limited**
**Britannic House**
**1 Finsbury Circus**
**London EC2M 7BA (GB)**

(72) Inventor : **Gibson, Vernon Charles, Dept. of Chemistry**
**University of Durham,**
**Science Labs.,**
**South Road**
**Durham DH1 3LE (GB)**

(74) Representative : **Hymers, Ronald Robson et al**
**BP International Limited,**
**Patents & Agreements Division,**
**Chertsey Road**
**Sunbury-on-Thames, Middlesex, TW16 7LN (GB)**

## (54) Olefin polymerisation catalysts.

(57) Metal imido complexes of Group V or VI metals suitable for use as olefin polymerisation catalysts have the general formula I or II.

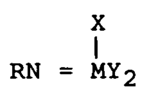

(I)

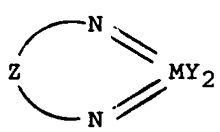

or

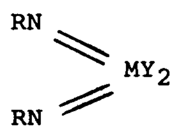

(II)

wherein in Formula I M is Group V metal and in Formula II M is Group VI metal.
R = alkyl or aryl and may be the same or different,
Z = bridging group chosen from $(CH_2)_x$ wherein x = 3-6, arylalkylene, or heteroalkylene groups,
X = organic group containing a cyclopentadienyl nucleus,
Y = univalent anionic ligand, halide, amido, hydrogen, alkyl or aryl and may be the same or different, and
with the proviso that when M is niobium or tungsten R is not aryl.

Particularly preferred complexes are those in which the metal is chromium or vanadium. The catalysts show an improved resistance to poisons.

EP 0 641 804 A2

The present invention relates to novel Group V and VI metal complexes and in particular to their use as olefin polymerisation catalysts. In particular the invention relates to novel chromium imido complexes.

Catalysts comprising transition metals have been widely used for polymerisation reactions. For example bis(cyclopentadienyl) metal complexes containing zirconium or titanium have long been recognised as an important class of catalyst systems for the Ziegler-Natta polymerisation of olefins, when used with suitable cocatalysts.

To improve the commercial performance of olefin polymerisation catalysts it would be desirable to improve their resistance to poisons while using low cocatalyst to catalyst ratios. It would also be desirable to improve the tolerance of olefin polymerisation catalysts to functionalised comonomers.

Transition metal-nitrogen multiple bonded species are known to act as both homogeneous and heterogeneous catalysts for a variety of reactions.

WO 94/01471 relates to transition metal olefin polymerisation catalysts and discloses generally the preparation and use of cationic metal complexes having reactive metal-ligand sigma bonds stabilised by polyanionic ligands. Particularly suitable complexes disclosed are tungsten and niobium complexes in which the polyanionic ligands are represented by aryl imido groups.

We have now found that specific transition metal imido complexes may be used as olefin polymerisation catalysts which show stability and reduced catalyst deactivation.

We have also found that certain novel chromium imido complexes may be prepared and may be particularly suitable for use as olefin polymerisation catalysts.

Thus according to the present invention there is provided a catalyst or catalyst precursor suitable for use in the polymerisation of olefins comprising a metal imido complex having the formula I or II

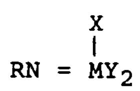

(I)

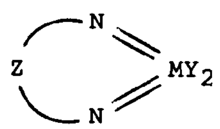

or

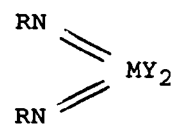

(II)

wherein in Formula I M is Group V metal and in Formula II M is Group VI metal.

R = alkyl or aryl and may be the same or different,

Z = bridging group chosen from $(CH_2)_x$ wherein x = 3-6, arylalkylene, or heteroalkylene groups,

X = organic group containing a cyclopentadienyl nucleus,

Y = univalent anionic ligand, halide, amido, hydrogen, alkyl or aryl and may be the same or different, and with the proviso that when M is niobium or tungsten R is not aryl.

Preferred complexes are those wherein M is vanadium or chromium.

R is for example tert-butyl or aryl eg p-tolyl and Y is halide.

Particularly preferred complexes are those with the general formula:

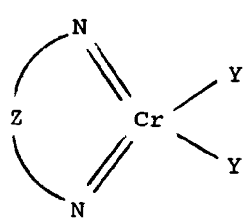

or

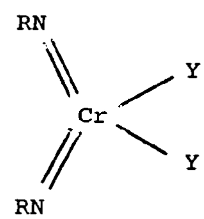

wherein:

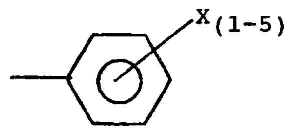

R = alkyl, or

X = hydrogen, alkyl, halocarbon, halide, and Z and Y are as defined above.

X is preferably methyl, ethyl, isopropyl or t-butyl.

A particularly preferred complex is that wherein R is 2,6-diisopropylphenyl and the Y groups are halide and tert-butylamido represented by the structure:

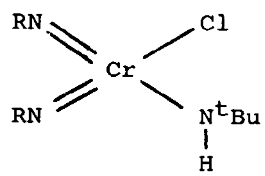

wherein R =

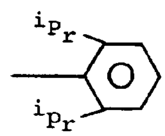

Complexes may suitably be prepared for example in which the X substituent is present in the 2-, 2,6- or 2,4,6-positions of the phenyl ring.

Other preferred complexes are those wherein Y contains an aryl substituent eg benzyl and in particular wherein

Y = - $CH_2$

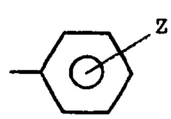

and Z = hydrogen, alkyl, halocarbon or halide.

A particularly preferred complex is represented by the structure:

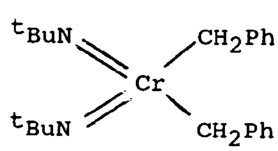

Examples of complexes having suitable bridging groups as defined in Formula II are:

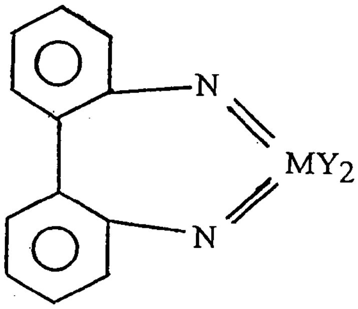

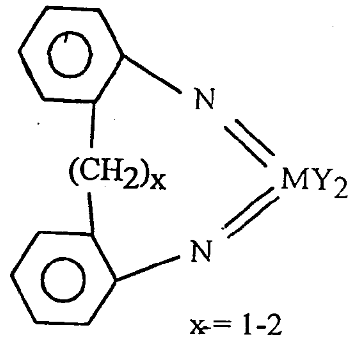

x= 1-2

x = 1-4

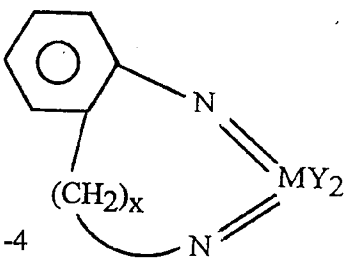

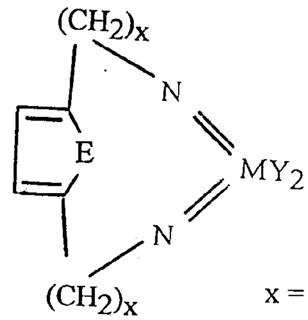

x = 1-2

E = O, S or NH

x = 1-2

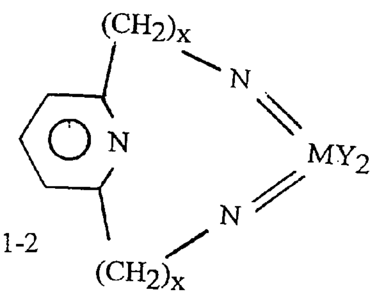

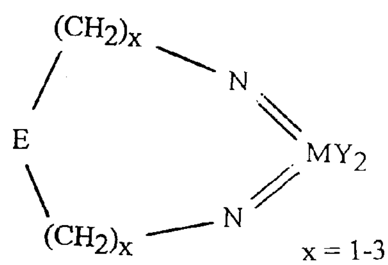

x = 1-3

E = O, S or NH

M and Y are as defined above

The complexes according to the present invention may be used in the presence of suitable cocatalysts for example organometallic compounds having a metal from Group Ia, IIa, IIb or IIIb of the periodic table. Such cocatalysts are known for their use in polymerisation reactions especially the polymerisation of olefins and include organoaluminium compounds such as trialkyl, alkyl hydrido, alkyl halo and alkyl alkoxy aluminium compounds.

Examples of such compounds include trimethylaluminium, triethylaluminium, diethyl aluminium hydride, triisobutyl aluminium, tridecyl aluminium, tridodecyl aluminium, diethyl aluminium methoxide, diethyl aluminium ethoxide, diethyl aluminium phenoxide, diethyl aluminium chloride, ethyl aluminium dichloride, methyl diethoxy aluminium and methyl aluminoxane.

Other suitable cocatalysts for use with the complexes of the present invention include Bronsted or Lewis acids for example trispentafluorophenylborane and dimethylanilinium tetrakispentafluorophenyl borate.

The latter is particularly preferred as cocatalyst for use with the chromium complexes of the present invention having Y = alkyl, in particular benzyl ligands.

The complexes may suitably be used as catalysts for the production of polyolefins in particular homopolymers of ethylene and copolymers of ethylene with alpha olefins eg C3 to C10 preferably C3 to C8 alpha-olefins. Suitably the alpha-olefins may be propylene, butene-1, hexene-1, 4-methyl pentene-1 and octene-1.

When used as catalysts for the polymerisation of olefins the complexes according to the present invention

may be used in a cocatalyst : catalyst ratio in the range 10,000 : 1 to 1:1 on a molar basis for cocatalysts based on organoaluminium compounds and in the range 20:1 to 1:1 and most preferably in the range 5:1 to 1:1 for cocatalysts based on boron compounds.

The complexes according to the present invention may be used to produce polymers using solution, slurry or gas-phase polymerisation techniques. The complexes according to the present invention may also be used together with other conventional polymerisation catalysts for example Ziegler or metallocene catalysts.

The complexes may suitable be impregnated on a suitable catalyst support for example silica, alumina or magnesium chloride. Preparation of supported catalysts may be carried out by conventional techniques.

The catalysts or catalyst precursors according to the present invention may suitably be used in the form of prepolymers which may be prepared by conventional methods.

A particular advantage of using the chromium complexes of the present invention having alkyl substituents is that a reduced catalyst deactivation occurs compared with conventional olefin polymerisation catalysts particularly when used with Bronsted acid cocatalysts.

The present invention will be further illustrated by reference to the following examples which describe the preparation of metal imido complexes and their use as polymerisation catalysts.

**Example 1 - Preparation of (Cp) V (Ntol) $Cl_2$**

8.6ml (91.3 mmol) of $VOCl_3$ were syringed into a stirring solution of 11.5 ml (91.2 mmol) p-tolyl isocyanate in 70 ml dry octane and the mixture refluxed under $N_2$ for 3 hrs. The octane was removed and product dried for 18 hrs at 70°C to give $V(Ntol)Cl_3$ (87%).

A solution of 0.39 ml (1.16 mmol) of $nBu_3Sn(Cp)$ in 40 mls methylene chloride was added dropwise to a stirring solution of 0.31g (1.18 mmol) of $V(Ntol)Cl_3$ in 60 mls methylene chloride. The resultant solution was heated to 45°C for 24 hrs then filtered to give $(Cp)V(Ntol)Cl_2$ (74%).

**Example 2 - Preparation of Cr $(N^tBu)_2Cl_2$**

10g (64.5 mmol) of $CrO_2Cl_2$ in 20 ml of cold (-78°C) heptane were added dropwise over 5 min. to a stirred solution of 38.4 g (264.2 mmol) of tert-butyl (trimethylsilyl) amine in 100 ml heptane at -20°C. The solution was allowed to warm to room temperature and then heated to 60°C for 1 hr. After cooling the solution was stirred overnight, filtered and concentrated to give Cr $(N^tBu)_2$ $(OSiMe_3)_2$ (87%).

A solution of 1.14 ml (13.15 mmol) $BCl_3$ in 15ml heptane was added dropwise over 5 min. to a stirred solution of 2.5g (6.57 mmol) $Cr(N^tBu)_2$ $(OSiMe_3)_2$ in 60 ml methylene chloride at 0°C. The mixture was allowed to warm to room temperature and stirred for 2 hrs. Volatiles were removed and product extracted in hot heptane at 75°C to give $Cr(N^tBu)_2$ $Cl_2$ (92%).

**Example 3 - Preparation of $Cr(N^tBu)_2(CH_2Ph)_2$**

$Cr(N^tBu)_2Cl_2$ (250mg, 0.94 mmol) was dissolved in 80 ml diethyl ether and the solution cooled to -78°C. 2 equivalents of benzylmagnesium chloride were added dropwise via syringe to give a translucent red solution. The solution was allowed to warm to room temperature and then stirred for 18 hours. The solution was filtered, the volatile components removed in vacuo and the resulting red solid extracted with pentane, concentrated and cooled to -30°C to yield $Cr(N^tBu)_2(CH_2Ph)_2$ (75%).

**Example 4 - Preparation of $Cr(NAr)_2(NH^tBu)Cl$**

$Cr(N^tBu)_2Cl_2$ (250mg, 0.94 mmol) was dissolved in 70ml pentane and cooled to -78°C. A solution of 2,6-diisopropylaniline (1.89 mmol) in 20 mls pentane was added dropwise over a period of 10 min. The solution was allowed to warm to room temperature and then stirred for 18 hours after which the volatile components were removed in vacuo to yield $Cr(NAr)_2(NH^tBu)Cl$ (Ar = 2,6-diisopropyl $C_6H_3$) (60%).

**Example 5 - Alternative Preparation of $Cr(NAr)_2(NH^tBu)Cl$**

$Cr(N^tBu)_2Cl_2$ (250mg, 0.94 mmol) was dissolved in $Et_2O$ (ca. 30 ml) and cooled to -78°C. 2 equivalents LiNHAr were also dissolved in $Et_2O$ (ca. 70ml) and the solution of chromium catalyst was added dropwise via cannula over a 10 minute period. The resulting mixture was slowly allowed to warm up and left to stir over night. Filtration, followed by removal of the volatile components in vacuo gave a red solid which was further extracted with pentane to afford dark red crystals of $Cr(NAr)_2(NH^tBu)Cl$ (Ar = 2,6-diisopropyl $C_6H_3$) (26%).

**Example 6 - Preparation Of $Cr(NAr)_2Cl_2$**

[Ar=2,6 diisopropyl $C_6H_3$)$Cr(NAr)_2(NH^tBu)Cl$ (120mg, 0.24 mmol), prepared according to Examples 4 or 5 was dissolved in ca. 50 ml $CH_2Cl_2$ and the resulting solution cooled to 0°C in an ice bath. 1.2 equivalents of $BCl_3$ (1.0M solution in heptane) was added dropwise by syringe and the solution allowed to warm to room temperature. After 3 hours of stirring the volatiles were removed to afford a red oily solid. A pure sample of $Cr(NAr)_2Cl_2$ was obtained by sublimation (80°C under dynamic vacuum onto a $CO_2$/acetone cooled probe) (75%).

**Example 7 - Preparation of $Cr(NAr)_2(CH_2Ph)_2$**

Analogous method used as for the preparation of $Cr(N^tBu)_2(CH_2Ph)_2$ (Example 3) except the solvent used was THF.

$Cr(NAr)_2Cl_2$ (300mg, 0.64 mmol) was dissolved in THF and cooled to -78°C in an acetone/$CO_2$ slush bath. 2 equivalent of $PhCH_2MgCl$ were added dropwise via syringe over a 5 minute period and the resulting solution allowed to warm to room temperature. Stirring over night (ca. 15 hours) resulted in the slight colour change from red to red/brown. The volatile components were removed from the solution before the product was extracted with pentane. Small crystals of pure $Cr(NAr)_2(CH_2Ph)_2$ were isolated from a concentrated solution maintained at -30°C over night. (Ar = 2,6-diisopropyl $C_6H_3$) (25%).

**Examples 8 - 20 - Polymerisation of Ethylene (at 1 bar(a) Pressure)**

Ethylene was dried by passage through a column containing calcium chloride, molecular sieves and $P_2O_5$ each separated by glass wool, followed by passage through a bubbler containing 30 ml silicone oil to which 2 ml diethylaluminium chloride (DEAC) had been added.

Diethylaluminium chloride was added via syringe to a stirred solution of 50 mg catalyst in 200 ml toluene and the mixture stirred for 10 min. The resultant catalyst solution was purged with ethylene and after 1 hr. the polymerisation terminated by purging with $N_2$. The resultant polymer was isolated by filtration. Polymerisation details are given in the accompanying Tables.

**Examples 21 - 24 - Polymerisation of Ethylene (at 1 bar(a) Pressure)**

Methylaluminoxane (MAO) was prepared from aluminium sulphate hydrate and trimethylaluminium in toluene. 48 ml (12 mmol) of methylaluminoxane was syringed into a 500 ml round bottom ampoule and 50 ml toluene added. The ampoule was degassed and purged with ethylene which was dried as in Examples 8-20.

A solution of 2-10 mg of the catalyst in 30 ml toluene was added to the stirred solution of methyaluminoxane. After 1 hr the polymerisation was terminated by purging with $N_2$. The resultant polymer was isolated by filtration. Polymerisation details are also given in the accompanying Tables.

The activities of the catalysts according to the present invention may be compared with those of conventional titanium (Example 8) and zirconium (Example 21) catalysts.

**Examples 25- 44 - Polymerisation of ethylene (at elevated pressure)**

Polymerisations were carried out at elevated pressures using the complexes prepared above in the presence of cocatalysts. The procedure is illustrated as follows for Example 37.

Triethylaluminium (1.3 mmol) was added to a 3l stainless steel autoclave containing isobutane (1.5l). The chromium complex (0.13 mmol) prepared in Example 3 and $[PhN(Me_2)H]^+(B(C_6F_5)_4]^-$ (0.13 mmol) as cocatalyst were added to the autoclave at 30°C and at a partial pressure of ethylene of 10 bar. Ethylene was added to maintain constant pressure. The reaction was terminated after 1 hr by venting the autoclave. Solid polyethylene (41.9g) was recovered representing an activity of 31.2g.PE/mmol Cr.h.b$C_2$.

The ethylene flow required to maintain a constant pressure was monitored throughout the polymerisation indicating that little catalyst deactivation had occurred over 1 hr.

The results are also given in the accompanying Tables.

Activity profiles for Examples 37 and 39 are given below in Figures 1 and 2 respectively. These clearly demonstrate that ethylene flow does not fall significantly during the polymerisation reaction indicating that little catalyst deactivation had taken place.

| Ex | Catalyst Precursor (mmol) | Activator (mmol/equivs) | Temp (°C) | Pressure (bar) | Time (min) | Activity (g/mmol.h.b) |
|---|---|---|---|---|---|---|
| 8 | A (0.078) | DEAC (0.234/3) | 25 | 1 | 60 | 18.5 |
| 9 | B (0.081) | DEAC (0.243/3) | 25 | 1 | 60 | 6.5 |
| 10 | B (0.161) | DEAC (0.483/3) | 25 | 1 | 60 | 7.9 |
| 11 | B (0.161) | DEAC (0.483/3) | 25 | 1 | 30 | 7.8 |
| 12 | B (0.179) | DEAC (3.58/20) | 25 | 1 | 5 | 13.4 |
| 13 | B (0.175) | DEAC (3.50/20) | 25 | 1 | 10 | 15.1 |
| 14 | B (0.161) | DEAC (3.22/20) | 25 | 1 | 15 | 8.4 |
| 15 | B (0.179) | DEAC (3.58/20) | 25 | 1 | 17 | 10.2 |

DEAC = Diethyl Aluminium Chloride

| Ex | Catalyst Precursor (mmol) | Activator (mmol/equivs) | Temp (°C) | Pressure (bar) | Time (min) | Activity (g/mmol.h.b) |
|---|---|---|---|---|---|---|
| 16 | B (0.188) | DEAC (3.76/20) | 25 | 1 | 30 | 5.9 |
| 17 | B (0.173) | DEAC (3.46/20) | 25 | 1 | 45 | 4.4 |
| 25 | B (0.200) | DEAC (4.0/20) | 50 | 10 | 60 | 0.23 |
| 26 | B (0.208) | DEAC (20.8/100) | 30 | 10 | 60 | 0.1 |
| 27 | B (0.177) | TEA (8.85/50) | 30 | 10 | 60 | < 0.1 |
| 21 | C (0.008) | MAO (12/1500) | 0 | 1 | 60 | 662.5 |
| 22 | B (0.007) | MAO (12/1715) | 25 | 1 | 60 | 27.1 |

TEA = Triethyl Aluminium

MAO = Methyl Aluminoxane

| Ex | Catalyst Precursor (mmol) | Activator (mmol/equivs) | Temp (°C) | Pressure (bar) | Time (min) | Activity (g/mmol.h.b) |
|---|---|---|---|---|---|---|
| 23 | B (0.03) | MAO (12/400) | 60 | 1 | 60 | 4.3 |
| 18 | D (0.189) | DEAC (0.567/3) | 25 | 1 | 60 | 2.1 |
| 19 | D (0.193) | DEAC (3.86/20) | 25 | 1 | 60 | 9.0 |
| 28 | D (0.376) | DEAC (7.5/20) | 50 | 10 | 60 | 0.33 |
| 29 | D (0.19) | DEAC (95/500) | 50 | 10 | 60 | 0.47 |
| 30 | D (0.20) | DEAC (10/50) | 28 | 10 | 60 | 3.0 |
| 31 | D (0.19) | DEAC (9.5/50) | 30 | 10 | 60 | 1.5 |
| 32 | D (0.188) | TEA (18.8/100) | 50 | 10 | 60 | < 0.1 |

Example 31 - 50 ml 4-MP-1 used

| Ex | Catalyst Precursor (mmol) | Activator (mmol/equivs) | Temp (°C) | Pressure (bar) | Time (min) | Activity (g/mmol.h.b) |
|---|---|---|---|---|---|---|
| 33 | D (0.20) | TEA (10/50) | 28 | 10 | 60 | < 0.1 |
| 34 | D (0.20) | MAO (100/500) | 33 | 10 | 60 | < 0.1 |
| 24 | D (0.04) | MAO (12/300) | 25 | 1 | 60 | 4.4 |
| 20 | E (0.134) | DEAC (0.402/3) | 25 | 1 | 60 | 0.7 |

| Ex | Catalyst Precursor (mmol) | Activator (mmol/equivs) | Temp (°C) | Pressure (bar) | Time (min) | Activity (g/mmol.h.b) |
|---|---|---|---|---|---|---|
| 35 | F (0.13) | $[PhNMe_2H][B(C_6F_5)_4]$ (0.13/1) | 32 | 10 | 60 | 31.2 |
| 36 | F (0.13) | $[PhNMe_2H][B(C_6F_5)_4]$ (0.13/1) | 30 | 10 | 60 | 50.2 |
| 37 | F (0.13) | $[PhNMe_2H][B(C_6F_5)_4]$ (0.13/1) | 50 | 10 | 60 | 57.8 |
| 38 | F (0.13) | $[PhNMe_2H][B(C_6F_5)_4]$ (0.13/1) | 75 | 10 | 60 | 31.6 |
| 39 | F (0.13) | $[PhNMe_2H][B(C_6F_5)_4]$ (0.65/5) | 50 | 10 | 60 | 65.4 |
| 40 | F (0.13) | $[Ph_3C][B(C_6F_5)_4]$ (0.051/1) | 50 | 10 | 60 | 25.7 |
| 41 | G (0.051) | $[PhNMe_2H][B(C_6F_5)_4]$ (0.051/1) | 50 | 15 | 60 | 18.9 |
| 42 | H (0.048) | $[PhNMe_2H][B(C_6F_5)_4]$ (0.048/1) | 50 | 15 | 60 | 4 |

| Ex | Catalyst Precursor (mmol) | Activator (mmol/equivs) | Temp (°C) | Pressure (bar) | Time (min) | Activity (g/mmol.h.b) |
|---|---|---|---|---|---|---|
| 43 | F (0.13) | $[PhNMe_2H][B(C_6F_5)_4]$ (0.13/1) | 50 | 10 | 60 | 13.4 |
| 44 | F (0.13) | $[PhNMe_2H][B(C_6F_5)_4]$ (0.13/1) | 50 | 10 | 60 | 20.5 |

Eg 43 50ml 4-MP-1 used

Eg 44 1.4 barg hydrogen present

**Details of Catalyst Precursors:**

A = $Cp_2TiCl_2$

B = CpV (Ntol) $Cl_2$

C = $Cp_2ZrCl_2$

D = Cr $(N^tBu)_2Cl_2$

E = $Cr(N^tBu)_2(OTMS)_2$

F = $Cr(N^tBu)_2(benzyl)_2$

G = $Cr(NAr)_2(benzyl)_2$

Ar = 2,6-diisopropyl phenyl

H. = Mo $(NAr)_2(benzyl)_2$

Ar = 2,6-diisopropyl phenyl

## Claims

1. A catalyst or catalyst precursor suitable for use in the polymerisation of olefins comprising a metal imido complex having the formula I or II

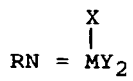

(I)

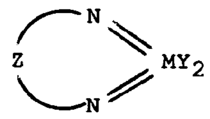

or

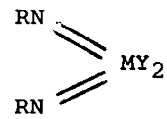

(II)

wherein in Formula I M is Group V metal and in Formula II M is Group VI metal.
R = alkyl or aryl and may be the same or different,
Z = bridging group chosen from $(CH_2)_x$ wherein x = 3-6, arylalkylene, or heteroalkylene groups,
X = organic group containing a cyclopentadienyl nucleus,
Y = univalent anionic ligand, halide, amido, hydrogen, alkyl or aryl and may be the same or different, and with the proviso that when M is niobium or tungsten R is not aryl.

2. A catalyst or catalyst precursor according to claim 1 wherein M is vanadium or chromium.

3. A catalyst or catalyst precursor according to either of the preceding claims wherein R is tert-butyl or aryl and Y is halide.

4. A catalyst or catalyst precursor suitable for use in the polymerisation of olefins comprising a chromium complex having the general formula:

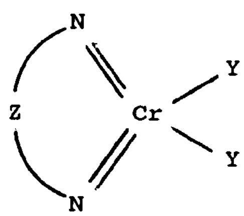

or

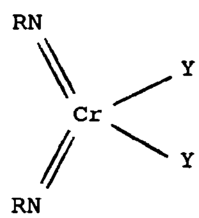

wherein:

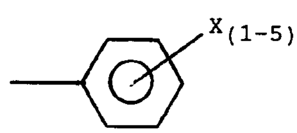

R = alkyl, or
X = hydrogen, alkyl, halocarbon, halide.
Z = bridging group chosen from $(CH_2)_x$ wherein x = 3-6, arylalkylene, or heteroalkylene groups,
Y = univalent anionic ligand, halide, amido, hydrogen, alkyl or aryl and may be the same or different.

5. A catalyst or catalyst precursor according to claim 4 wherein X is methyl, ethyl, isopropyl or t-butyl.

6. A catalyst or catalyst precursor according to claims 4 or 5 having the formula:

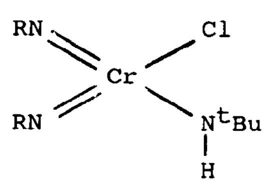

wherein R =

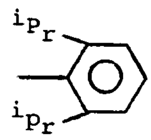

7. A catalyst or catalyst precursor according to claim 4 having the formula:

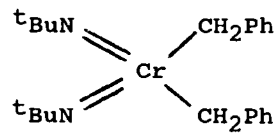

8. A catalyst or catalyst precursor according to any of the preceding claims used in the presence of a cocatalyst.

9. A catalyst or catalyst precursor according to claim 8 wherein the cocatalyst is an organo aluminium compound.

10. A catalyst or catalyst precursor according to claim 8 wherein the cocatalyst is a Bronsted or Lewis acid.

11. A catalyst or catalyst precursor according to claim 10 wherein the cocatalyst is tris pentafluorophenyl borane or dimethylanilinium tetrakis pentafluorophenyl borate.

12. A catalyst or catalyst precursor according to claim 8 wherein the ratio of cocatalyst to catalyst is in the range 10,000:1 to 1:1.

13. A catalyst or catalyst precursor according to claim 12 wherein the ratio is in the range 5:1 to 1:1.

14. A catalyst or catalyst precursor according to any of the preceding claims supported on an inorganic support.

15. A catalyst or catalyst precursor according to claim 14 wherein the support is silica, alumina or magnesium chloride.

16. A catalyst or catalyst precursor according to any of the preceding claims used in the presence of other polymerisation catalysts.

17. A catalyst or catalyst precursor according to any of the preceding claims used as a prepolymer.

18. A process for polymerisating olefins using a catalyst or catalyst precursor according to any of the preceding claims.

19. A process according to claim 18 carried out in the gas phase.

20. Polymers produced by the process according to claims 18 or 19.

21. A compound having the formula

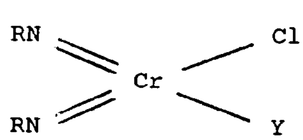

wherein
Y = Cl or NH$^t$Bu
R = 2,6-diisopropylphenyl.

**22.** A compound having the formula

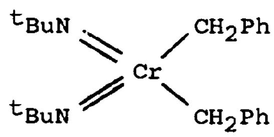

FIG.1

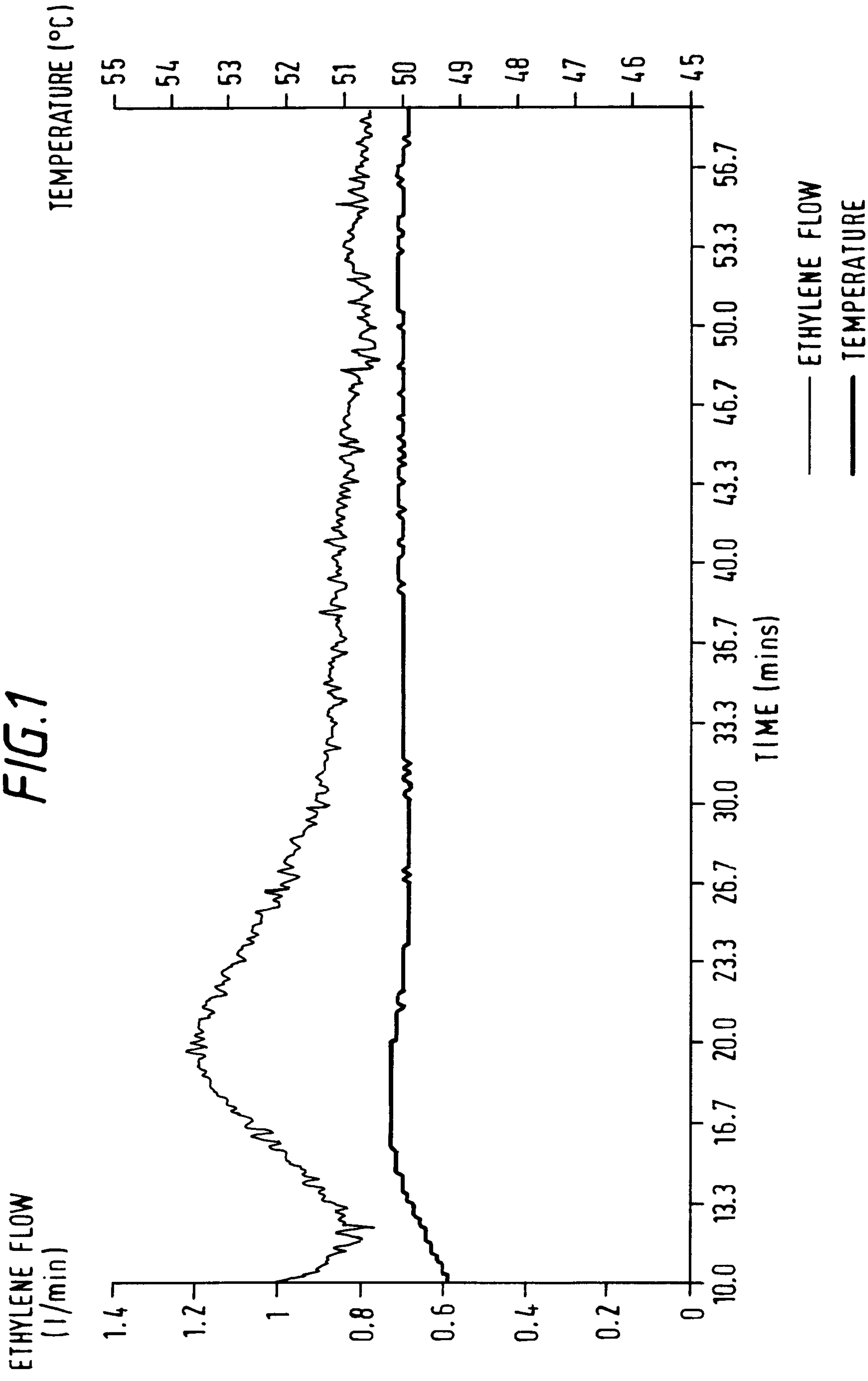
ETHYLENE FLOW (l/min)
1.4
1.2
1
0.8
0.6
0.4
0.2
0
TEMPERATURE (°C)
55
54
53
52
51
50
49
48
47
46
45
10.0
13.3
16.7
20.0
23.3
26.7
30.0
33.3
36.7
40.0
43.3
46.7
50.0
53.3
56.7
TIME (mins)
ETHYLENE FLOW
TEMPERATURE

FIG. 2

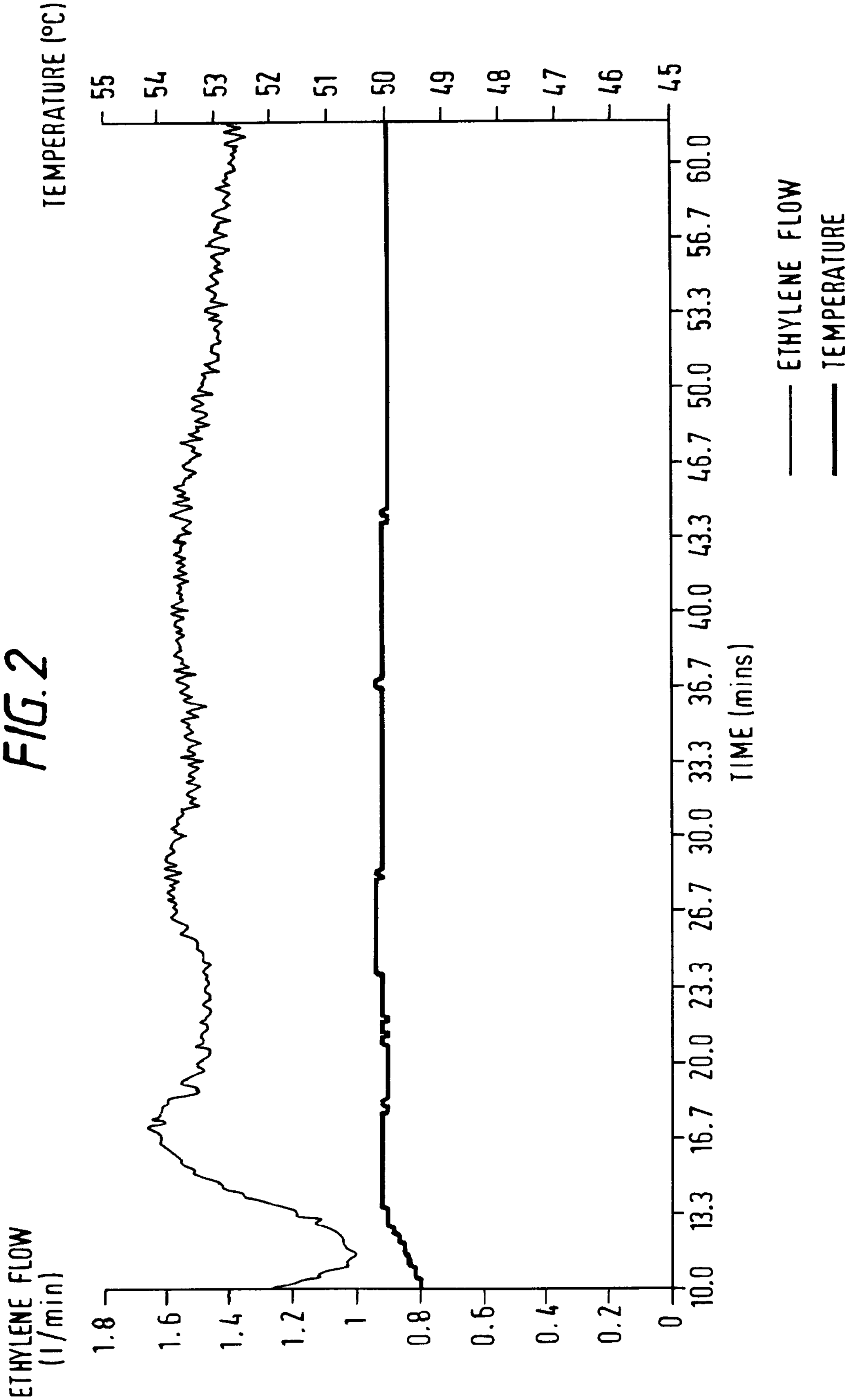
ETHYLENE FLOW (l/min)
1.8
1.6
1.4
1.2
1
0.8
0.6
0.4
0.2
0
TEMPERATURE (°C)
55
54
53
52
51
50
49
48
47
46
45
10.0
13.3
16.7
20.0
23.3
26.7
30.0
33.3
36.7
40.0
43.3
46.7
50.0
53.3
56.7
60.0
TIME (mins)
ETHYLENE FLOW
TEMPERATURE